# EUROPEAN PATENT SPECIFICATION

(11) **EP 4 417 491 B1**
(45) Date of publication and mention of the grant of the patent: **17.06.2026**
(21) Application number: 24154486.5
(22) Date of filing: 29.01.2024
(51) Int. Cl.: B62D 15/02

(54) **LANE DEPARTURE WARNING SYSTEM**
SPURVERLASSENSWARNSYSTEM
SYSTÈME D'AVERTISSEMENT DE SORTIE DE VOIE

(30) Priority: 20.02.2023 JP 2023024302
(43) Date of publication of application: 21.08.2024
(73) Proprietor: Suzuki Motor Corporation, Shizuoka 432-8611 (JP)
(72) Inventor: TANAKA, Kenji, HAMAMATSU-SHI, 432-8611 (JP)
(74) Representative: Plasseraud IP

(56) References cited:
- DE-A1- 102017 120 628
- DE-A1- 102017 202 615
- KR-A- 20150 083 273
- US-A1- 2015 109 114
- US-A1- 2020 023 899

## Description

### [Technical Field]

The present invention relates to a lane departure warning system using steering vibration.

### [Background Art]

A device is known that vibrates a steering wheel to provide a warning to a driver when the probability of a departure from a travel lane is detected. For example, Patent Literature 1 discloses increasing vibration torque for lane departure warning in a case in which a steering torque is large when a lane departure is determined, thereby preventing the vibration torque for warning from becoming small relative to an assist torque of an electric power steering device (from becoming less likely to be felt as a warning).
DE 102017120628 discloses the preamble of the independent claim and shows turn sensitive gain adjustment and asymmetric turn sensitive gain adjustment according to the turning direction. KR 20150083273 discloses a steering wheel system that determines a vibration pattern according to the dangerous elements detected in the vehicle's driving environment. US 2020023899 discloses a lane departure prevention apparatus which issue a vibration warning when there is a risk of deviation to the inside of a curve and which doesn't issued a vibration warning when there is a risk of deviation to the outside of a curve.

However, when the probability of a lane departure is determined in a situation of a transition from a straight road to a curved road, increasing the vibration torque for warning in response to the steering torque of the driver may not result in an effective warning due to a delay in control.

### [Citation List]

### [Patent Literature]

[Patent Literature 1] JP 6012832 B2

### [Summary of Invention]

### [Problem to be Solved by the Invention]

The present invention has been made in view of the circumstances as described above, and an object thereof is to provide a lane departure warning system that can provide a warning at an appropriate vibration level even in a situation of a transition from a straight road to a curved road.

### [Means for Solving the Problem]

In order to solve the above problem, the present invention is a lane departure warning system including:
a camera that captures an image ahead of a vehicle;
an image processing part that recognizes a travel lane from the image acquired by the camera and acquires a relative position of the vehicle in the travel lane;
a departure determining part that determines a probability of a departure of the vehicle from the travel lane on the basis of the relative position of the vehicle relative to the travel lane;
vibration means that applies vibration as a lane departure warning to a steering wheel of the vehicle when the departure determining part determines that there is a probability of a departure from the travel lane; and
a vibration warning controlling part that controls the vibration on the basis of a traveling state of the vehicle, in which
the lane departure warning system further includes a curvature acquiring part that acquires a curvature of the travel lane from the image, and
the vibration warning controlling part is configured to determine a vibration intensity in accordance with a speed of the vehicle and gain-adjust the vibration intensity on the basis of the curvature of the travel lane.

### [Advantageous Effect of Invention]

In the lane departure warning system according to the present invention, when the probability of a lane departure is determined on a curved road, in particular, in a situation of a transition from a straight road to a curved road, the configuration that performs gain adjustment of the vibration intensity on the basis of the curvature of the travel lane acquired from the camera image as described above can provide vibration warning that is gain-adjusted for a turn at the timing when the driver recognizes the curve and performs a steering operation and thereby, a delay in control that occurs when gain adjustment is performed in response to the steering torque can be prevented.

### [Brief Description of Drawings]

[Figure 1] Figure 1 is a block diagram showing a lane departure warning system according to an embodiment of the present invention.
[Figure 2] Figure 2 is a vehicle speed-vibration torque curve.
[Figure 3] Figure 3 is a steering torque-torque gain curve.
[Figure 4] Figure 4 is a curvature-curvature gain curve.
[Figure 5] Figure 5 is a curvature-curvature gain curve of another embodiment.

### [Mode for Carrying Out the Invention]

Hereinbelow, an embodiment of the present invention will be described in detail with reference to the drawings.

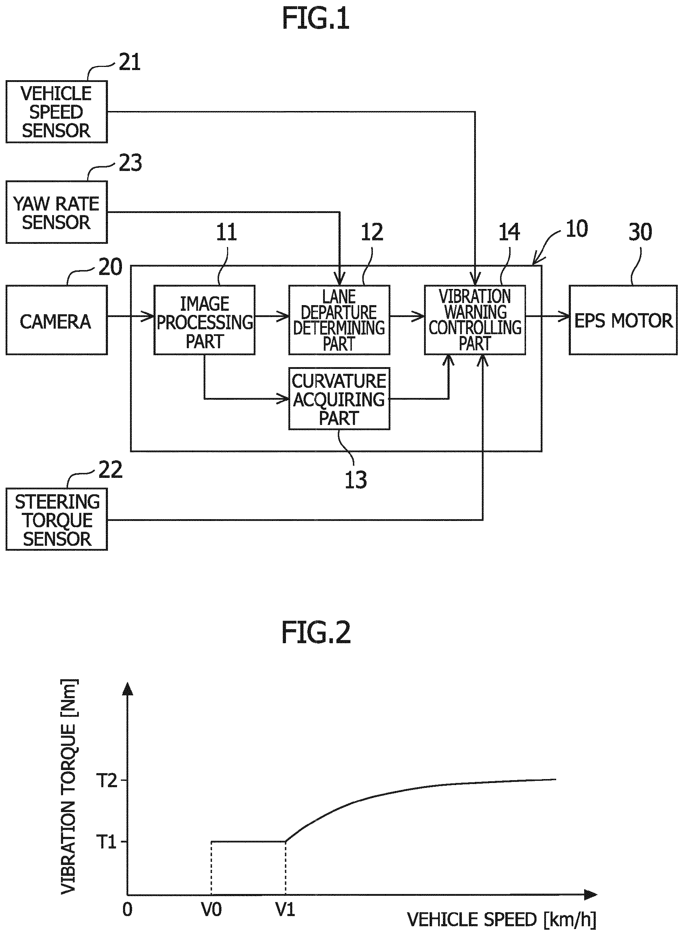

In Figure 1, a lane departure warning system includes a camera 20 that captures an image ahead of a vehicle, an image processing part 11 that acquires a travel path (travel lane) and a traveling position of the vehicle relative to the travel path from the captured image, a lane departure determining part 12 that determines the probability of a departure from the lane on the basis of the traveling position and a motion state of the vehicle, a curvature acquiring part 13 that acquires a curvature of the travel path on the basis of travel path information acquired from the camera image, a vibration warning controlling part 14 that controls a vibration warning so as to adapt the vibration warning to a vehicle state, taking the travel path curvature into consideration, when it is determined that there is a probability of a departure, and an EPS motor 30 (electric power steering motor) as vibration means. Description of the electric power steering device will be omitted because the configuration thereof is known.

A digital camera including a lens optical system, an image sensor (solid-state imaging element), a buffer memory, and the like can be used as the camera 20, and the camera 20 is preferably mounted on the top of a front window of the vehicle and is oriented in such a manner that the angle of view covers a near view area including a front end of a vehicle body and the ground surface and a distant view area including a vanishing point.

The image processing part 11 detects, through a recognition process, lane markings (road outside line or lane boundary line) from an input image captured by the camera 20 at a predetermined frame rate and acquires a travel path on which the vehicle is traveling and a relative traveling position of the vehicle relative to the travel path. For example, a white line, a yellow line, or the like is detected through binarization or edge detection, and a center line is acquired from the travel path (travel lane) and its central track.

The lane departure determining part 12 estimates a relative positional relationship between the division line and the vehicle on the basis of the amount of an offset of the center (the center of gravity) of the vehicle relative to the detected center line, determines whether a predetermined threshold at which it is determined that there is a probability of a departure of the vehicle from the division line has been exceeded, and when the predetermined threshold has been exceeded, a lane departure flag is set and a vibration start command is issued. When the predetermined threshold is not exceeded, the process moves on to processing on a next frame and continues. At this time, the radius of curvature of the traveling path may be acquired from a yaw rate detected by a yaw rate sensor 23, and the departure probability may be determined, taking the path of the vehicle into consideration.

The curvature acquiring part 13 acquires the curvatures (1/radius of curvature) of the right and left division lines detected by the image processing part 11 and continuously acquires the curvature of the center of the travel path as the average of these curvatures. When the curvature is less than a predetermined value at which the travel path can be regarded as substantially straight, the curvature is defined as zero. Note that, while the lane departure determination is performed at the current vehicle position or in the near view area ahead thereof, the curvature of the travel path is acquired from an image of an area including an area forward thereof.

Note that each of the calculating parts of the image processing part 11, the lane departure determining part 12, the curvature acquiring part 13, and the vibration warning controlling part 14, which will be described below, is implemented as a control unit 10 (ECU) that is a computer including a ROM (flash memory) that stores a program operable to execute each function, a CPU that performs arithmetic processing, a RAM into which the program is read, the RAM serving as a working area of the CPU and a temporary storage area for an arithmetic result, an input/output interface, and the like.

The vibration warning controlling part 14 includes a pulse generator that generates a rectangular wave in a frequency band serving as a basis for a vibration warning, an ON/OFF signal generating part that turns ON/OFF the generated continuous rectangular wave to shape into an intermittent rectangular wave, a vehicle speed sensitive gain calculating part that adjusts the vibration intensity of the intermittent rectangular wave to a vibration intensity corresponding to the vehicle speed, a turn sensitive gain calculating part that further gain-adjusts the adjusted vibration intensity of the intermittent rectangular wave on the basis of a steering torque and the travel path curvature, a multiplier circuit that superimposes a gain on each signal, and the like.

Figure 2 shows a vehicle speed-vibration torque curve (LUT) referenced in the vehicle speed sensitive gain calculating part. A lane departure warning is output when the vehicle speed is a predetermined value V0 (e.g., 40 to 50 km/h) or more, and is a constant value T1 up to a predetermined value V1, but is increased to T2 in a medium and high speed range of V1 or more, taking into consideration that an external vibration entering a steering mechanism from the steering wheel increases in accordance with the vehicle speed, so that the influence of the external vibration can be eliminated.

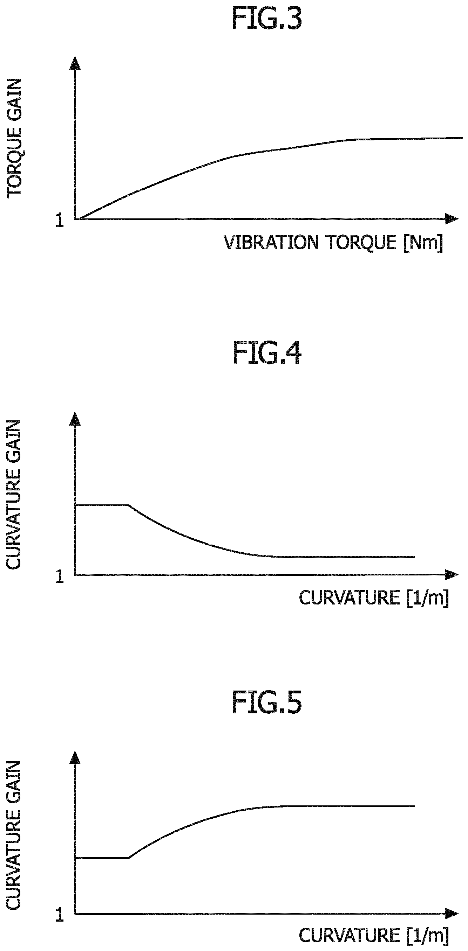

Figure 3 shows a steering torque-torque gain curve (LUT) referenced in the turn sensitive gain calculating part, and there is a characteristic that the torque gain basically increases in accordance with the steering torque and asymptotically approaches an upper limit value. However, the steering torque is generated by a driver recognizing a curve and performing a steering operation, and steering torque-based gain adjustment thus causes a delay in control.

On the other hand, as described above, since the road curvature acquired by the curvature acquiring part 13 is acquired forward of the current vehicle position, a change in the road curvature can be detected at a timing earlier than the detection of the steering torque. Thus, it is possible to deal with a delay in the steering torque-based gain adjustment by the turn sensitive gain calculating part simultaneously referring to the curvature-curvature gain curve (LUT) shown in Figure 4 and adding road curvature-based gain correction.

In this case, as shown in the curvature-curvature gain curve in Figure 4, the curvature gain is set at a constant value (maximum value) in a first region in which the curvature is less than a predetermined value so that the steering torque gain is complemented by the curvature gain in the first region in which a delay in the rise of the steering torque is expected, and the curvature gain is reduced in accordance with the curvature in a second region in which the curvature is the predetermined value or more so that an increase in the steering torque-based gain is cancelled, thereby preventing the vibration warning from becoming excessive in a region in which the steering torque increases in accordance with the curvature.

Although the above-mentioned embodiment according to Figures 3 and 4 describes the case in which the curvature gain and the steering torque gain are complementarily used in combination to provide a turn sensitive gain, the curvature gain may be configured to provide the turn sensitive gain.

In this case, the curvature-curvature gain curve is a curve obtained by combining the characteristic of Fig. 4 with the curve of Figure 3, that is, a curve in which the curvature gain is a constant value (minimum value) in the first region in which the curvature is less than the predetermined value and the curvature gain increases in accordance with the curvature in the second region in which the curvature is the predetermined value or more as shown in Figure 5.

Although some embodiments of the present invention have been described above, it is additionally to be noted that the present invention is not limited to each of the embodiments described above and various modifications and changes can be further made on the basis of the technical idea of the present invention as defined by the appended claims.

### [Reference Signs List]

- 10: Control unit (ECU)
- 11: Image processing part
- 12: Lane departure determining part
- 13: Curvature acquiring part
- 14: Vibration warning controlling part
- 20: Camera
- 21: Vehicle speed sensor
- 22: Steering torque sensor
- 23: Yaw rate sensor
- 30: EPS motor (vibration means)

## Claims

1. A lane departure warning system comprising:
a camera (20) for capturing an image ahead of a vehicle;
an image processing part (11) for recognizing a travel lane from the image acquired by the camera (20) and acquiring a relative position of the vehicle in the travel lane;
a departure determining part (12) for determining a probability of a departure of the vehicle from the travel lane on the basis of the relative position of the vehicle relative to the travel lane;
vibration means (30) for applying vibration as a lane departure warning to a steering wheel of the vehicle when the departure determining part (12) determines that there is a probability of a departure from the travel lane; and
a vibration warning controlling part (14) that controls the vibration on the basis of a traveling state of the vehicle,
**characterized in that** the lane departure warning system further comprises a curvature acquiring part that acquires a curvature of the travel lane ahead from a second image area including an area farther forward than the image area in which the departure probability is determined, and
the vibration warning controlling part is configured to determine a vibration intensity in accordance with a speed of the vehicle and gain-adjust the vibration intensity on the basis of the curvature of the travel lane.

2. The lane departure warning system according to claim 1, wherein the vibration warning controlling part (14) is configured to gain-adjust the vibration intensity complementarily using a curvature gain based on the curvature of the travel lane and a steering torque gain based on a steering torque in combination.

3. The lane departure warning system according to claim 2, wherein the steering torque gain is configured to be applied with a characteristic that increases in accordance with the steering torque, and the curvature gain is configured to be applied with a characteristic that is large in a region in which the curvature is small and decreases as the curvature increases.

4. The lane departure warning system according to claim 1, wherein a first curvature gain is configured to be applied when the curvature is less than a predetermined curvature, and a second curvature gain greater than the first curvature gain is configured to be applied when the curvature is the predetermined curvature or more.

5. The lane departure warning system according to claim 4, wherein the second curvature gain is configured to be applied with a characteristic that increases as the curvature increases.

## Patentansprüche

1. Spurverlassen-Warnsystem, umfassend:
eine Kamera (20) zum Erfassen eines Bilds vor einem Fahrzeug;
einen Bildverarbeitungsteil (11) zum Erkennen einer Fahrspur aus dem durch die Kamera (20) akquirierten Bild und Akquirieren einer relativen Position des Fahrzeugs in der Fahrspur;
einen Verlassen-Bestimmungsteil (12) zum Bestimmen einer Wahrscheinlichkeit eines Verlassens des Fahrzeugs von der Fahrspur auf Grundlage der relativen Position des Fahrzeugs relativ zu der Fahrspur;
Vibrationsmittel (30) zum Aufbringen einer Vibration als eine Spurverlassen-Warnung auf ein Lenkrad des Fahrzeugs, wenn der Verlassen-Bestimmungsteil (12) bestimmt, dass eine Wahrscheinlichkeit eines Verlassens von der Fahrspur besteht; und
einen Vibrationswarnung-Steuerungsteil (14), welcher die Vibration auf Grundlage eines Fahrzustands des Fahrzeugs steuert,
**dadurch gekennzeichnet, dass** das Spurverlassen-Warnsystem ferner einen Krümmung-Akquirierungsteil umfasst, welcher eine Krümmung der vorausliegenden Fahrspur aus einem zweiten Bildbereich akquiriert, welcher einen Bereich umfasst, welcher weiter vorne liegt als der Bildbereich, in welchem die Verlassen-Wahrscheinlichkeit bestimmt wird, und
wobei der Vibrationswarnung-Steuerungsteil dazu eingerichtet ist, eine Vibrationsintensität in Übereinstimmung mit einer Geschwindigkeit des Fahrzeugs zu bestimmen und die Vibrationsintensität auf Grundlage der Krümmung der Fahrspur verstärkungsanzupassen.

2. Spurverlassen-Warnsystem nach Anspruch 1, wobei der Vibrationswarnung-Steuerungsteil (14) dazu eingerichtet ist, die Vibrationsintensität komplementär unter Verwendung einer Krümmungsverstärkung auf Grundlage der Krümmung der Fahrspur und einer Lenkmomentverstärkung auf Grundlage eines Lenkmoments in Kombination verstärkungsanzupassen.

3. Spurverlassen-Warnsystem nach Anspruch 2, wobei die Lenkmomentverstärkung dazu eingerichtet ist, mit einer Charakteristik aufgebracht zu werden, welche in Übereinstimmung mit dem Lenkmoment zunimmt, und die Krümmungsverstärkung dazu eingerichtet ist, mit einer Charakteristik aufgebracht zu werden, welche in einem Bereich, in welchem die Krümmung klein ist, groß ist und abnimmt, wenn die Krümmung zunimmt.

4. Spurverlassen-Warnsystem nach Anspruch 1, wobei eine erste Krümmungsverstärkung dazu eingerichtet ist, aufgebracht zu werden, wenn die Krümmung geringer als eine vorbestimmte Krümmung ist, und eine zweite Krümmungsverstärkung, welche größer als die erste Krümmungsverstärkung ist, dazu eingerichtet ist, aufgebracht zu werden, wenn die Krümmung die vorbestimmte Krümmung oder mehr ist.

5. Spurverlassen-Warnsystem nach Anspruch 4, wobei die zweite Krümmungsverstärkung dazu eingerichtet ist, mit einer Charakteristik aufgebracht zu werden, welche zunimmt, wenn die Krümmung zunimmt.

## Revendications

1. Système d'avertissement de sortie de voie comprenant :
une caméra (20) pour capturer une image devant un véhicule ;
une partie traitement d'image (11) pour reconnaître une voie de circulation à partir de l'image acquise par la caméra (20) et acquérir une position relative du véhicule dans la voie de circulation ;
une partie de détermination de sortie (12) pour déterminer une probabilité de sortie du véhicule de la voie de circulation sur la base de la position relative du véhicule par rapport à la voie de circulation ;
un moyen vibrant (30) pour appliquer une vibration, en tant qu'avertissement de sortie de voie, à un volant du véhicule lorsque la partie détermination de sortie (12) détermine qu'il existe une probabilité de sortie de la voie de circulation ; et
une partie commande d'avertissement par vibration (14) qui commande la vibration sur la base d'un état de déplacement du véhicule,
**caractérisé en ce que** le système d'avertissement de sortie de voie comprend en outre une partie acquisition de courbure qui acquiert une courbure de la voie de circulation en amont à partir d'une seconde zone d'image comprenant une zone plus éloignée vers l'avant que la zone d'image dans laquelle la probabilité de sortie est déterminée, et
la partie commande d'avertissement par vibration est configurée pour déterminer une intensité de vibration en fonction d'une vitesse du véhicule et ajuster par gain l'intensité de vibration sur la base de la courbure de la voie de circulation.

2. Système d'avertissement de sortie de voie selon la revendication 1, dans lequel la partie commande d'avertissement par vibration (14) est configurée pour ajuster par gain, de manière complémentaire, l'intensité de vibration en utilisant en combinaison un gain de courbure basé sur la courbure de la voie de circulation et un gain de couple de direction basé sur un couple de direction.

3. Système d'avertissement de sortie de voie selon la revendication 2, dans lequel le gain de couple de direction est configuré pour être appliqué avec une caractéristique qui augmente en fonction du couple de direction, et le gain de courbure est configuré pour être appliqué avec une caractéristique qui est grande dans une région dans laquelle la courbure est petite et diminue à mesure que la courbure augmente.

4. Système d'avertissement de sortie de voie selon la revendication 1, dans lequel un premier gain de courbure est configuré pour être appliqué lorsque la courbure est inférieure à une courbure prédéterminée, et un second gain de courbure supérieur au premier gain de courbure est configuré pour être appliqué lorsque la courbure est la courbure prédéterminée ou plus.

5. Système d'avertissement de sortie de voie selon la revendication 4, dans lequel le second gain de courbure est configuré pour être appliqué avec une caractéristique qui augmente à mesure que la courbure augmente.
